# FASCICULE DE BREVET EUROPEEN

(11) **EP 0 778 093 B1**
(45) Date de publication et mention de la délivrance du brevet: **28.03.2001**
(21) Numéro de dépôt: 96402447.5
(22) Date de dépôt: 15.11.1996
(51) Int. Cl.: B21D 53/26

(54) **Roue pour véhicule terrestre à moteur**
Kraftfahrzeugrad
Motor vehicle wheel

(30) Priorité: 07.12.1995 FR 9514439
(43) Date de publication de la demande: 11.06.1997
(73) Titulaire: SOLLAC S.A., 92800 Puteaux (FR)
(72) Inventeur: Marron, Guy, Villa de Madame Brian, 13120 Gardanne (FR); Murru, Patrick, 13500 Martigues (FR)
(74) Mandataire: Ventavoli, Roger

(56) Documents cités:
- EP-A- 0 593 932
- US-A- 3 767 267
- PATENT ABSTRACTS OF JAPAN vol. 95, no. 008 & JP-A-07 195998 (TOKAI RIKA CO LTD), 1 Août 1995,
- PATENT ABSTRACTS OF JAPAN vol. 012, no. 495 (M-780), 23 Décembre 1988 & JP-A-63 215328 (SUMITOMO METAL IND LTD), 7 Septembre 1988,
- PATENT ABSTRACTS OF JAPAN vol. 014, no. 420 (M-1023), 11 Septembre 1990 & JP-A-02 165892 (MITSUBISHI METAL CORP), 26 Juin 1990,

## Description

La présente invention concerne une roue pour véhicule terrestre à moteur comportant un voile de roue et une jante sensiblement cylindrique, le voile de roue étant constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, aussi bien qu'un procédé de réalisation d'une telle roue selon le préambule de la revendication 4.

Les éléments d'une roue de véhicule terrestre à moteur sont généralement obtenus par emboutissage et/ou fluotournage à partir d'un flan de tôle homogène.

Les différentes opérations de formage donnent en final, un profil du voile de roue généralement constitué de cinq zones circulaires concentriques, qui sont :
- la partie centrale qui sert à fixer la roue sur le moyeu de l'essieu du véhicule,
- la montée intérieure sensiblement conique reliant la portée de la partie centrale et le sommet de la roue appelé nez de galbe,
- le nez de galbe qui présente un rayon de courbure important,
- la zone arrière du nez de galbe, partie conique inversée, sur laquelle se situe des trous d'allégement,
- le bord tombé par lequel est généralement réalisée la liaison du voile de roue avec la jante.

Le procédé connu de réalisation d'un voile de roue à partir d'un flan de tôle unique, homogène, a pour inconvénient majeur de ne pas distribuer notamment, les épaisseurs comme on le désirerait. Il n'est pas possible d'avoir des propriétés physiques et mécaniques associées aux zones par exemple, les plus sollicitées ou encore, des amincissements dans des zones de moindres contraintes mécaniques. Lorsqu'on analyse mécaniquement la roue, il apparaît qu'en fonctionnement, la zone la plus sollicitée du voile de roue est le nez de galbe et la zone la moins sollicitée dudit voile est le bord tombé. Pour assurer la distribution des zones d'épaisseurs minimales, la tôle est sur-dimensionnée pour pallier les amincissements localisés dus au procédé de mise en forme du flan de tôle.

Le but de l'invention est d'assurer un allégement de la roue en optimisant localement, les caractéristiques mécaniques et les épaisseurs du voile de la roue en fonction des sollicitations des différentes parties de ladite roue.

Selon l'invention, ce but est atteint par une roue avec les caractéristiques de la revendication 1. Un procédé de réalisation d'une roue selon l'invention est définie dans la revendication 4.

La description qui suit et les figures annexées, le tout donné à titre d'exemple, fera bien comprendre l'invention.

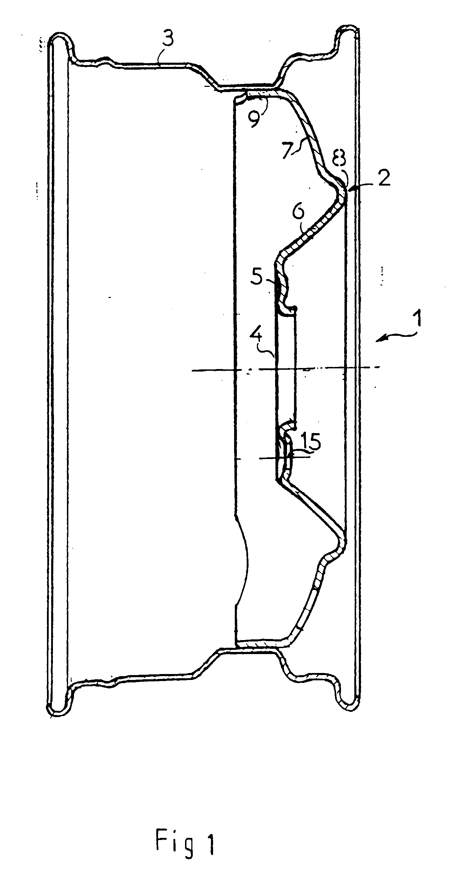

Le figure 1 est une vue en coupe d'une roue de véhicule terrestre à moteur conventionelle présentant les différentes parties de ladite roue.

La figure 2 une vue en perspective d'un flan de tôle avant soudure.

La figure 3 est une vue en coupe d'une roue de véhicule selon un mode de réalisation de l'invention.

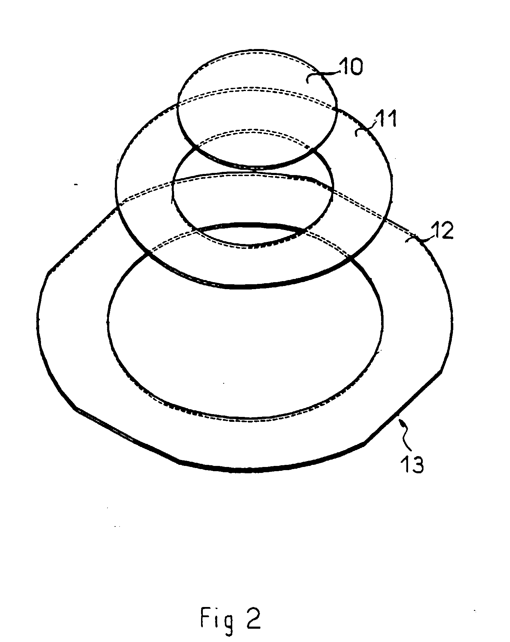

L'invention traite d'une roue 1 pour véhicule terrestre à moteur comportant, comme représenté sur la figure 1, un voile 2 de roue et une jante 3 sensiblement cylindrique, et d'un procédé de réalisation d'une telle roue. Le voile 2 de roue est constitué d'une partie centrale 4 sensiblement plane comportant, une portée 5 qui sert à centrer et à fixer la roue 1 sur un moyeu d'un essieu, une montée 6 intérieure sensiblement conique, reliée à une autre partie conique inversée 7 définissant, avec la montée 6, un nez de galbe 8 qui présente un rayon de courbure important, la partie conique inversée 7, partie arrière du nez de galbe 8, se terminant par un bord tombé 9. Le bord tombé 9 est destiné à la liaison du voile 2 avec la jante 3. Le procédé de réalisation d'une roue selon l'invention se caractérise en ce que pour réaliser le voile 2 de roue 1 :
- on découpe au moins deux couronnes dans des tôles différentes en épaisseur et/ou en caractéristiques mécaniques, les couronnes s'ajustant concentriquement l'une avec l'autre,
- on lie par soudage bord à bord, au moins deux couronnes planes concentriques pour former un flan 13 de tôle composé,
- on forme le flan 13 de tôle composé d'au moins deux couronnes soudées de façon à adapter les différentes parties du voile 2 en corrélation avec les couronnes et leurs caractéristiques au niveau des contraintes induites par la charge exercée sur la roue 1. Dans l'exemple présenté sur la figure 2, le flan 13 est composé de trois couronnes planes 10, 11, 12, découpées, ajustées, et destinées à être soudées par exemple, bord à bord

Dans son principe, l'invention consiste en l'utilisation d'un flan de tôle possédant des variations d'épaisseur et/ou des caractéristiques mécaniques localisées pour obtenir après mise en forme du voile de roue, des épaisseurs optimisées par rapport à la charge imposée à la roue lors de son fonctionnement. Pour cela on utilise des couronnes de tôle de différentes épaisseurs et/ou de différentes caractéristiques mécaniques, les couronnes étant par exemple, raboutées entre elles par soudage LASER mais aussi par tout autre moyen.

Dans l'exemple de la figure 2, la couronne 10 est réservée à la partie centrale 4 de voile 2 définissant une portée 5, partie sur laquelle sont percés des trous 15 de fixation de la roue 1 sur un axe d'essieu.

La couronne 11 est réservée à la partie où se trouve le galbe 8 de roue, zone particulièrement critique du point de vue fatigue mécanique. La couronne 12 est réservée à la partie arrière 7 du nez de galbe 8 et au bord tombé 9 servant de support à la jante 3.

Les caractéristiques de ces trois couronnes sont les suivantes :

La couronne 10 doit avoir une bonne aptitude au formage, au relevé de collet et à l'expansion de trou pour la réalisation de rayons de raccordement avec la montée intérieure 6 du nez de galbe 8 et pour la réalisation des trous 15 de fixation.

La couronne 11 présente une bonne résistance à la fatigue et à l'endommagement. Elle est de préférence placée, lors de la réalisation du flan composé, de manière à former le nez de galbe 8.

La couronne 12 présente une bonne aptitude au rétreint et une bonne résistance à l'effet d'entaille ainsi que de bonnes propriétés pour le soudage. Elle forme de préférence la partie périphérique de flan de tôle composé.

Le choix du couple composition et/ou épaisseur de chaque couronne est déterminé en fonction d'essais de fatigue. Il dépend du procédé de mise en forme. Par exemple, pour une zone comportant des poinçonnages sévères, il sera opportun que la couronne correspondante réponde au critère de bonne découpabilité.

Il apparaît que la couronne 12 extérieure du voile selon l'invention, peut être d'épaisseur relativement faible ou de caractéristiques mécaniques relativement peu élevées. Elle doit être réalisée dans une tôle soudable.

La couronne 11 destinée à former le nez de galbe 8 devra être réalisée avec une tôle d'acier à hautes caractéristiques mécaniques généralement destinée à l'emboutissage.

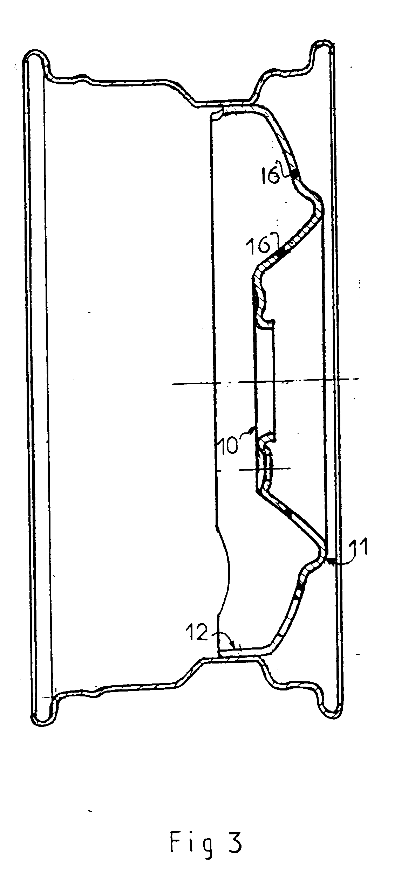

La figure 3 présente une roue selon un mode de réalisation de l'invention comportant un voile de roue composé de trois couronnes 10, 11, 12, soudées bout à bout, le raboutage étant repéré par les cordons de soudure 16.

Le tableau 1 ci-dessous présente les caractéristiques des trois couronnes du point de vue de la composition métallurgique et du point de vue de l'épaisseur, dans quatre exemples de réalisation de la roue. Les compositions d'aciers sont choisies de manière à correspondre aux exigences de formabilité et de résistance mécanique statique et dynamique attachées à chacune des parties de roue.

Les épaisseurs choisies sont elles aussi en rapport avec une optimisation de la masse de la roue vis-à-vis de critères de contrainte en fatigue maximale.

La référence est une roue connue réalisée dans l'industrie. Le voile de roue est obtenu à partir d'un seul flan de tôle de nuance E 24 et de 3,9 mm d'épaisseur.

Les couronnes dans les exemples peuvent être réalisées avec des aciers de plus hautes caractéristiques mécaniques, ce qui génère un allégement de la roue.

**TABLEAU 1**

| **Exemple** | **couronne** | **E24** | **HR80** | **DP60** | **HR60** | **HR55** | **S355** |
|---|---|---|---|---|---|---|---|
| **A** | 10 | | | | | 3,3 | |
| | 11 | | 3,1 | | | | |
| | 12 | 3,3 | | | | | |
| | | | | | | | |
| **B** | 10 | | | | | 3,3 | |
| | 11 | | | 3,3 | | | |
| | 12 | 3,3 | | | | | |
| | | | | | | | |
| **C** | 10 | | | | | 3,3 | |
| | 11 | | | | 3,4 | | |
| | 12 | 3,3 | | | | | |
| | | | | | | | |
| **D** | 10 | 3,5 | | | | | |
| | 11 | | | | | | 3,6 |
| | 12 | 3,3 | | | | | |
| | | | | | | | |
| **Référence** | | 3,9 | | | | | |

Le tableau 2 suivant présente la masse des roues de chacun des exemples ainsi que le gain de masse en % réalisé en comparaison avec la roue de référence.

**TABLEAU 2**

| **Exemple** | **masse ( Kg )** | **Gain ( % )** |
|---|---|---|
| **A** | 3,25 | 16,87 |
| | | |
| **B** | 3,31 | 15,38 |
| | | |
| **C** | 3,34 | 14,64 |
| | | |
| **D** | 3,43 | 12,39 |

La roue selon l'invention comporte, au niveau du voile de roue, des épaisseurs de tôle différentes distribuées de manière à optimiser les caractéristiques mécaniques et physiques de l'acier de la tôle et de la tôle elle-même, dans le domaine des contraintes induites par la charge de la roue lors de son fonctionnement.

## Revendications

1. Roue pour véhicule terrestre à moteur comportant un voile de roue et une jante sensiblement cylindrique, le voile de roue étant constitué, d'une partie centrale sensiblement plane comportant une portée qui sert à centrer et à fixer la roue sur le moyeu de l'essieu du véhicule, une montée intérieure sensiblement conique, une autre partie conique inversée définissant, avec la montée intérieure, un nez de galbe qui présente un rayon de courbure important, la partie conique inversée se terminant par un bord tombé, destiné à la liaison du voile et la jante, caractérisée en ce que le voile de roue est composé d'au moins deux parties circulaires de nature différente en épaisseur et/ou en caractéristiques mécaniques, assemblées concentriquement l'une avec l'autre.

2. Roue selon la revendication 1, caractérisée en ce que les parties circulaires sont des couronnes planes soudées puis embouties dans la forme du voile.

3. Roue selon la revendication 2, caractérisée en ce que les couronnes sont assemblées par une soudure LASER.

4. Procédé de réalisation d'une roue pour véhicule terrestre à moteur selon les revendications 1 à 3, comportant un voile de roue et une jante sensiblement cylindrique, le voile de roue étant constitué, d'une partie centrale sensiblement plane comportant une portée qui sert à centrer et à fixer la roue sur le moyeu de l'essieu, une montée intérieure sensiblement conique, une autre partie conique inversée définissant, avec la montée intérieure, un nez de galbe qui présente un rayon de courbure important, la partie conique inversée se terminant par un bord tombé destiné à la liaison du voile avec la jante, caractérisé en ce que pour réaliser le voile de roue :
- on découpe au moins deux couronnes dans des tôles différentes en épaisseur et/ou en caractéristiques mécaniques, les couronnes s'ajustant concentriquement l'une avec l'autre,
- on lie par soudage bord à bord, au moins deux couronnes planes concentriques pour former un flan de tôle,
- on forme le flan de tôle composé d'au moins deux couronnes soudées de façon à adapter les différentes partie du voile en corrélation avec les couronnes et leurs caractéristiques au niveau des contraintes induites par la charge exercée sur la roue.

## Patentansprüche

1. Rad für ein Motorfahrzeug, das einen Radkörper und eine im wesentlichen zylindrische Felge aufweist, wobei der Radkörper aus einem im wesentlichen ebenen Mittenabschnitt mit einer Anlagefläche besteht zur Zentrierung und Befestigung des Rades an einer Achsnabe des Fahrzeugs, aus einer im wesentlichen konischen inneren Rampe besteht, aus einem weiteren entgegengesetzt konischen Teil besteht, das zusammen mit der inneren Rampe einen konturierten Vorsprung mit großem Krümmungsradius bildet, wobei das entgegengesetzt konische Teil als Randstück endet, das der Verbindung des Radkörpers mit der Felge dient, dadurch gekennzeichnet, dass der Radkörper aus wenigstens zwei kreisförmigen Teilen unterschiedlichen Aufbaus hinsichtlich der Dicke und und/oder der mechanischen Eigenschaften besteht, die konzentrisch zueinander zusammengefügt sind.

2. Rad nach Anspruch 1, dadurch gekennzeichnet, dass die kreisförmigen Teile ebene Ringe sind, die miteinander verschweißt sind und danach durch Ziehen zum Radkörper verformt sind.

3. Rad nach Anspruch 2, dadurch gekennzeichnet, dass die Ringe durch eine Laser-Verschweißung miteinander verbunden sind.

4. Verfahren zur Herstellung eines Rades für ein Motorfahrzeug nach Ansprüchen 1 bis 3, das einen Radkörper und eine im wesentlichen zylindrische Felge aufweist, wobei der Radkörper aus einem im wesentlichen ebenen Mittenabschnitt mit einer Anlagefläche besteht zur Zentrierung und Befestigung des Rades an der Achsnabe, aus einer im wesentlichen konischen inneren Rampe besteht, aus einem weiteren entgegengesetzt konischen Teil besteht, das zusammen mit der inneren Rampe einen konturierten Vorsprung mit großem Krümmungsradius bildet, wobei das entgegengesetzt konische Teil in einem Randstück endet, das der Verbindung des Radkörpers mit der Felge dient, dadurch gekennzeichnet, dass zur Herstellung des Radkörpers:
- wenigstens zwei Ringe aus unterschiedlichen Blechen hinsichtlich der Dicken und/oder der mechanischen Eigenschaften ausgeschnitten werden, wobei die Ringe konzentrisch zueinander angepaßt sind,
- durch Randverschweißung wenigstens zwei ebene konzentrische Ringe miteinander verbunden werden, um eine Blechscheibe zu bilden,
- die aus wenigstens zwei miteinander verschweißten Ringen zusammengesetzte Blechscheibe derart verformt wird, dass die verschiedenen Abschnitte des Radkörpers unter Berücksichtigung der Ringe und ihrer Eigenschaften an die bei Belastung des Rades auftretenden Beanspruchungen angepaßt werden.

## Claims

1. Wheel for a land motor vehicle comprising a wheel disc and an essentially cylindrical rim, the wheel disc consisting of an essentially flat central part comprising a bearing surface which is used for centring and fixing the wheel on the hub of the axle of the vehicle, an essentially conical internal upstand, another, reversed, conical part defining, with the internal upstand, the tip of a curve which has a large radius of curvature, the reversed conical part ending in a turned-down edge intended for connecting the disc and the rim, characterized in that the wheel disc is made up of at least two circular parts, of different natures in terms of thicknesses and/or in terms of mechanical properties which are assembled concentrically one with respect to the other.

2. Wheel according to Claim 1, characterized in that the circular parts are flat rings, which are welded then pressed into the shape of the disc.

3. Wheel according to Claim 2, characterized in that the rings are assembled by LASER welding.

4. Method for producing a wheel for a land motor vehicle according to Claims 1 to 3, comprising a wheel disc and an essentially cylindrical rim, the wheel disc consisting of an essentially flat central part comprising a bearing surface which is used for centring and fixing the wheel on the hub of the axle, an essentially conical internal upstand, another, reversed, conical part defining, with the internal upstand, the tip of a curve which has a large radius of curvature, the reversed conical part ending in a turned-down edge intended for connecting the disc and the rim, characterized in that, in order to make the wheel disc:
- at least two rings are cut from metal sheets which differ in terms of thickness and/or in terms of mechanical properties, the rings fitting together concentrically,
- welding is used to connect at least two concentric flat rings edge to edge in order to form a sheet metal blank,
- the sheet metal blank made up of at least two welded rings is shaped in such a way as to adapt the various parts of the disc according to the rings and their properties in terms of the stresses induced by the load exerted on the wheel.
